(19) Europäisches Patentamt / European Patent Office / Office européen des brevets

(11) EP 4 461 146 A1

(12) **EUROPEAN PATENT APPLICATION**
published in accordance with Art. 153(4) EPC

(43) Date of publication:
13.11.2024 Bulletin 2024/46

(21) Application number: 23866609.3

(22) Date of filing: 30.11.2023

(51) International Patent Classification (IPC):
*A24D 1/02* (2006.01)    *A24D 1/20* (2020.01)
*A24F 40/46* (2020.01)    *A24F 40/51* (2020.01)
*A24F 40/50* (2020.01)    *A24F 40/57* (2020.01)
*D21H 27/00* (2006.01)    *D21H 21/14* (2006.01)
*A24F 40/60* (2020.01)

(86) International application number:
PCT/KR2023/019628

(87) International publication number:
WO 2024/204949 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.03.2023 KR 20230038707

(71) Applicant: KT&G Corporation
Daedeok-gu
Daejeon 34337 (KR)

(72) Inventor: CHOI, Sang Won
Daejeon 34128 (KR)

(74) Representative: Ter Meer Steinmeister & Partner
Patentanwälte mbB
Nymphenburger Straße 4
80335 München (DE)

(54) **AEROSOL GENERATING ARTICLE COMPRISING WRAPPER TO WHICH CONDUCTIVE POLYMER IS APPLIED, AND AEROSOL GENERATING SYSTEM**

(57)    An aerosol generating system includes an aerosol generating article including an identifier, and an aerosol generating device configured to accommodate the aerosol generating article. The aerosol generating device includes a housing, an elongated cavity into which the aerosol generating article is inserted, a heater configured to heat the aerosol generating article, a coil antenna configured to be formed to surround the elongated cavity, an inductance sensor configured to measure an inductance value of the coil antenna, and a controller configured to recognize characteristics of the aerosol generating article based on the inductance value that changes as the aerosol generating article is inserted into the elongated cavity, and the identifier is applied onto a wrapper of the aerosol generating article.

FIG. 2

## Description

Technical Field

The disclosure relates to an aerosol generating article and an aerosol generating system, and more particularly, to an aerosol generating article including a wrapper coated with a conductive polymer, and an aerosol generating system.

Background Art

An aerosol generating article containing leaf tobacco to which flavoring materials are added has been developed. When the aerosol generating article is burned or heated, a nicotine-containing aerosol may be transferred to a user. As the aerosol generating device transfers energy to the aerosol generating article described above, a medium in the aerosol generating article may be aerosolized. The above description is information the inventor(s) acquired during the course of conceiving the present disclosure, or already possessed at the time, and is not necessarily art publicly known before the present application was filed. For example, Korean Patent Application Publication No. 10-2017-0132823 discloses a non-combustion-type flavor inhaler, a flavor inhalation component source unit, and an atomizing unit.

Disclosure of the Invention

Technical Goals

An aspect of the present disclosure may provide an aerosol generating article containing a conductive adhesive material representing its own characteristics.

An aspect of the present disclosure may provide an aerosol generating system that recognizes information that varies depending on a type, amount, and applied pattern of a conductive adhesive material.

Technical Solutions

An aerosol generating system according to various embodiments includes an aerosol generating article including an identifier, and an aerosol generating device configured to accommodate the aerosol generating article. The aerosol generating device may include a housing, an elongated cavity into which the aerosol generating article is inserted, a heater configured to heat the aerosol generating article, a coil antenna configured to be formed to surround the elongated cavity, an inductance sensor configured to measure an inductance value of the coil antenna, and a controller configured to recognize characteristics of the aerosol generating article based on the inductance value that changes as the aerosol generating article is inserted into the elongated cavity, and the identifier may be applied onto a wrapper of the aerosol generating article.

In an embodiment, the identifier may be implemented as an adhesive for attaching the wrapper, and the identifier may include a conductive material.

In an embodiment, a type of the conductive material or a pattern of the conductive material applied onto the wrapper may vary depending on a type of the aerosol generating article.

In an embodiment, the identifier may be disposed at a position corresponding to one end of the aerosol generating article.

In an embodiment, an inductance value detected by the inductance sensor may vary depending on the pattern of the conductive material applied onto the wrapper.

In an embodiment, the controller may be configured to adjust a heating temperature of the heater according to detected characteristics of the aerosol generating article.

In an embodiment, the aerosol generating system may further include a temperature sensor.

An aerosol generating article according to various embodiments includes a first end surface, a second end surface on a side opposite to the first end surface, a side surface formed between the first end surface and the second end surface, a medium rod, a filter rod, and a wrapper. The medium rod and the filter rod may be aligned side by side in a direction from the second end surface toward the first end surface, the wrapper may include an inner wrapping surface that contacts with the medium rod and the filter rod, and an outer wrapping surface formed on a side opposite to the inner wrapping surface, and an identifier may be applied onto the inner wrapper surface.

In an embodiment, the aerosol generating article may further include a front end plug disposed on an end of the second end surface, and the identifier may be applied onto the inner wrapping surface of the wrapper corresponding to the front end plug.

In an embodiment, a pattern of the identifier applied onto the wrapper may vary depending on a type of the aerosol generating article.

In an embodiment, the identifier may include a conductive material.

In an embodiment, the conductive material may have adhesiveness.

Effects

The aerosol generating article according to an embodiment may represent unique characteristics of the article according to various types, amounts, and applied patterns of a conductive adhesive material. The aerosol generating system according to an embodiment may recognize a conductive adhesive material applied onto the aerosol generating article, thereby diversifying device operating methods. The effects of the aerosol generating article and the aerosol generating system according to an embodiment are not limited to the above-mentioned effects, and other unmentioned effects can be clearly understood from the following description by one of ordinary skill in the art.

Brief Description of Drawings

The foregoing and other aspects, features, and advantages of embodiments in the disclosure will become apparent from the following detailed description with reference to the accompanying drawings.

FIG. 1 is a block diagram of an aerosol generating device according to an embodiment.

FIG. 2 is a diagram schematically illustrating an aerosol generating system according to an embodiment.

FIG. 3 is a diagram schematically illustrating a mechanism for detecting an inductance sensor of an aerosol generating system according to an embodiment.

FIG. 4 is a perspective view schematically illustrating an aerosol generating article according to an embodiment.

FIG. 5A is an enlarged view of an area A of the aerosol generating article of FIG. 4 according to an embodiment.

FIG. 5B is an enlarged view of the area A of the aerosol generating article of FIG. 4 according to an embodiment.

FIG. 5C is an enlarged view of the area A of the aerosol generating article of FIG. 4 according to an embodiment.

Best Mode for Carrying Out the Invention

The terms used in the embodiments are selected from among common terms that are currently widely used, in consideration of their function in the disclosure. However, the terms may become different according to an intention of one of ordinary skill in the art, a precedent, or the advent of new technology. Also, in particular cases, the terms are discretionally selected by the applicant of the disclosure, and the meaning of those terms will be described in detail in the corresponding part of the detailed description. Therefore, the terms used in the disclosure are not merely designations of the terms, but the terms are defined based on the meaning of the terms and content throughout the disclosure.

It will be understood that when a certain part "includes" a certain component, the part does not exclude another component but may further include another component, unless the context clearly dictates otherwise. Also, terms such as "unit," "module," etc., as used in the specification may refer to a part for processing at least one function or operation and which may be implemented as hardware, software, or a combination of hardware and software.

As used herein, an expression such as "at least one of" that precedes listed components modifies not each of the listed components but all the listed components. For example, the expression "at least one of a, b, or c" should be construed as including a, b, c, a and b, a and c, b and c, or a, b, and c.

In the following embodiments, the term "aerosol generating article" may refer to an article that accommodates a medium, in which an aerosol passes through the article and the medium is transferred. A representative example of the aerosol generating article may be a cigarette. However, the scope of the disclosure is not limited thereto.

In the following embodiments, the term "upstream" or "upstream direction" may refer to a direction away from an oral region of a user (smoker), and the term "downstream" or "downstream direction" may refer to a direction approaching the oral region of the user. The terms "upstream" and "downstream" may be used to describe relative positions of components of an aerosol generating article.

In the following embodiments, the term "puff" refers to inhalation by a user, and the inhalation refers to a situation in which a user draws in an aerosol into his or her oral cavity, nasal cavity, or lungs through the mouth or nose.

In an embodiment, an aerosol generating device may be a device that generates an aerosol by electrically heating an aerosol generating article accommodated in an inner space.

The aerosol generating device may include a heater. In an embodiment, the heater may be an electrically resistive heater. For example, the heater may include an electrically conductive track, and the heater may be heated as a current flows through the electrically conductive track.

The heater may include a tubular heating element, a plate-shaped heating element, a needle-shaped heating element, or a rod-shaped heating element, and may heat the inside or outside of the aerosol generating article according to the shape of a heating element.

The aerosol generating article may include a tobacco rod and a filter rod. The tobacco rod may be formed as a sheet or a strand, or may be formed of tobacco leaves finely cut from a tobacco sheet. In addition, the tobacco rod may be enveloped by a thermally conductive material. For example, the thermally conductive material may be metal foil such as aluminum foil. However, embodiments are not limited thereto.

The filter rod may be a cellulose acetate filter. The filter rod may include at least one segment. For example, the filter rod may include a first segment that cools an aerosol and a second segment that filters a predetermined ingredient contained in the aerosol.

In another embodiment, the aerosol generating device may be a device that generates an aerosol using a cartridge containing an aerosol generating material.

The aerosol generating device may include a cartridge containing the aerosol generating material and a main body supporting the cartridge. The cartridge may be detachably coupled to the main body. However, embodiments are not limited thereto. The cartridge may be integrally formed or assembled with the main body, and may be secured to the main body so as not to be detached by a user. The cartridge may be mounted on the main body while the aerosol generating material is accommodated therein. However, embodiments are not limited thereto. The aerosol generating material may be injected into the cartridge while the cartridge is coupled to the main body.

The cartridge may hold the aerosol generating material in any one of various states, such as a liquid state, a solid state, a gaseous state, and a gel state. The aerosol generating material may include a liquid composition. For example, the liquid composition may be a liquid including a tobacco-containing material having a volatile tobacco flavor component, or may be a liquid including a non-tobacco material.

The cartridge may be operated by an electrical signal or a wireless signal transmitted from the main body to perform the function of generating an aerosol by converting a phase of the aerosol generating material inside the cartridge to a gaseous phase. The aerosol may refer to a gas in which vaporized particles generated from the aerosol generating material are mixed with air.

In another embodiment, the aerosol generating device may generate an aerosol by heating the liquid composition, and the generated aerosol may pass through the cigarette and be delivered to the user. That is, the aerosol generated from the liquid composition may travel along an airflow path of the aerosol generating device, and the airflow path may be configured to allow the aerosol to pass through the cigarette and be delivered to the user.

In another embodiment, the aerosol generating device may be a device that generates an aerosol from the aerosol generating material using an ultrasonic vibration manner. In this case, the ultrasonic vibration manner may refer to a manner of generating an aerosol by atomizing the aerosol generating material with ultrasonic vibration generated by a vibrator.

The aerosol generating device may include a vibrator, and may generate vibration at short intervals through the vibrator to atomize the aerosol generating material. The vibration generated by the vibrator may be ultrasonic vibration, and a frequency band of the ultrasonic vibration may be from about 100 kilohertz (kHz) to about 3.5 megahertz (MHz). However, embodiments are not limited thereto.

The aerosol generating device may further include a wick that absorbs the aerosol generating material. For example, the wick may be disposed to surround at least one area of the vibrator or may be disposed to contact at least one area of the vibrator.

As a voltage (e.g., an alternating voltage) is applied to the vibrator, the vibrator may generate heat and/or ultrasonic vibration, and the heat and/or ultrasonic vibration generated by the vibrator may be transmitted to the aerosol generating material absorbed in the wick. The aerosol generating material absorbed in the wick may be converted into a gas phase by the heat and/or ultrasonic vibration transmitted from the vibrator, and consequently, an aerosol may be generated.

For example, the viscosity of the aerosol generating material absorbed in the wick may be lowered by the heat generated by the vibrator, and the aerosol generating material whose viscosity is lowered may change to fine particles by the ultrasonic vibration generated by the vibrator, so that an aerosol may be generated. However, embodiments are not limited thereto.

In another embodiment, the aerosol generating device may be a device that generates an aerosol by heating the aerosol generating article accommodated therein in an induction heating manner.

The aerosol generating device may include a susceptor and a coil. In an embodiment, the coil may apply a magnetic field to the susceptor. As the aerosol generating device supplies power to the coil, a magnetic field may be formed inside the coil. In an embodiment, the susceptor may be a magnetic body that generates heat by an external magnetic field. As the susceptor is positioned inside the coil and generates heat with the magnetic field applied, the aerosol generating article may be heated. Also, optionally, the susceptor may be positioned in the aerosol generating article.

In another embodiment, the aerosol generating device may further include a cradle.

The aerosol generating device and the separate cradle may form a system together. For example, the cradle may be used to charge a battery of the aerosol generating device. Alternatively, a heater may be heated when the cradle and the aerosol generating device are coupled to each other.

Hereinafter, embodiments of the disclosure will be described in detail with reference to the accompanying drawings such that one of ordinary skill in the art may easily practice the disclosure. The disclosure may be practiced in forms that are implementable in the aerosol generating devices according to various embodiments described above or may be embodied and practiced in many different forms and is not limited to the embodiments described herein.

Hereinafter, embodiments of the disclosure will be described in detail with reference to the drawings.

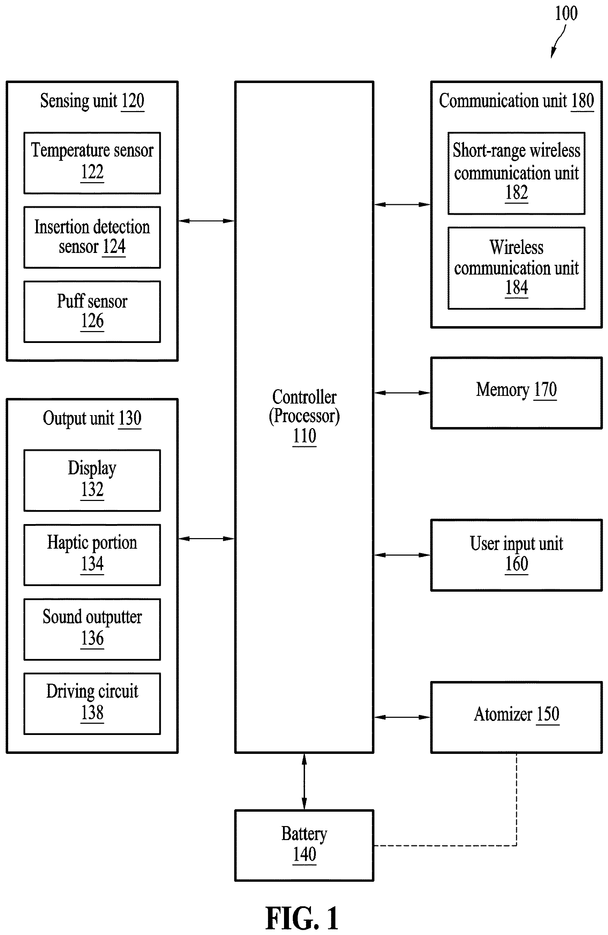

FIG. 1 is a block diagram of an aerosol generating device 100 according to an embodiment.

The aerosol generating device 100 may include a controller 110, a sensing unit 120, an output unit 130, a battery 140, a heater 150, a user input unit 160, a memory 170, and a communication unit 180. However, an internal structure of the aerosol generating device 100 is not limited to what is shown in FIG. 1. It is to be understood by one of ordinary skill in the art to which the disclosure pertains that some of the components shown in FIG. 1 may be omitted or new components may be added according to the design of the aerosol generating device 100.

The sensing unit 120 may sense a state of the aerosol generating device 100 or a state of an environment around the aerosol generating device 100, and transmit sensing information obtained through the sensing to the controller 110. Based on the sensing information, the controller 110 may control the aerosol generating device 100 to control operations of the heater 150, restrict smoking, determine whether an aerosol generating article (e.g., an aerosol generating article, a cartridge, etc.) is inserted, display a notification, and perform other functions.

The sensing unit 120 may include at least one of a temperature sensor 122, an insertion detection sensor 124, or a puff sensor 126. However, embodiments are not limited thereto.

The temperature sensor 122 may sense a temperature at which the heater 150 (or an aerosol generating material) is heated. The aerosol generating device 100 may include a separate temperature sensor for sensing the temperature of the heater 150, or the heater 150 itself may also function as a temperature sensor. Alternatively, the temperature sensor 122 may be arranged around the battery 140 to monitor a temperature of the battery 140.

The insertion detection sensor 124 may sense whether the aerosol generating article is inserted and/or removed. The insertion detection sensor 124 may include, for example, at least one of a film sensor, a pressure sensor, a light sensor, a resistive sensor, a capacitive sensor, an inductive sensor, or an infrared sensor, which may sense a signal change by the insertion and/or removal of the aerosol generating article.

The puff sensor 126 may sense a puff from a user based on various physical changes in an airflow path or airflow channel. For example, the puff sensor 126 may sense the puff from the user based on one of a temperature change, a flow change, a voltage change, and a pressure change.

The sensing unit 120 may further include at least one of a temperature/humidity sensor, an atmospheric pressure sensor, a magnetic sensor, an acceleration sensor, a gyroscope sensor, a position sensor (e.g., a global positioning system (GPS)), a proximity sensor, or a red, green, blue (RGB) sensor (e.g., an illuminance sensor), in addition to the sensors 122 to 126 described above. A function of each sensor may be intuitively inferable from its name by one of ordinary skill in the art, and thus, a more detailed description thereof will be omitted here.

The output unit 130 may output information about the state of the aerosol generating device 100 and provide the information to the user. The output unit 130 may include at least one of a display 132, a haptic portion 134, or a sound outputter 136. However, embodiments are not limited thereto. When the display 132 and a touchpad are provided in a layered structure to form a touchscreen, the display 132 may be used as an input device in addition to an output device.

The display 132 may visually provide information about the aerosol generating device 100 to the user. The information about the aerosol generating device 100 may include, for example, a charging/discharging state of the battery 140 of the aerosol generating device 100, a preheating state of the heater 150, an insertion/removal state of the aerosol generating article, a limited usage state (e.g., an abnormal article detected) of the aerosol generating device 100, or the like, and the display 132 may externally output the information. The display 132 may be, for example, a liquid-crystal display panel (LCD), an organic light-emitting display panel (OLED), or the like. The display 132 may also be in the form of a light-emitting diode (LED) device.

The haptic portion 134 may provide information about the aerosol generating device 100 to the user in a haptic way by converting an electrical signal into a mechanical stimulus or an electrical stimulus. The haptic portion 134 may include, for example, a motor, a piezoelectric element, or an electrical stimulation device.

The sound outputter 136 may provide information about the aerosol generating device 100 to the user in an auditory way. For example, the sound outputter 136 may convert an electrical signal into a sound signal and externally output the sound signal.

The battery 140 may supply power to be used to operate the aerosol generating device 100. The battery 140 may supply power to heat the heater 150. In addition, the battery 140 may supply power required for operations of the other components (e.g., the sensing unit 120, the output unit 130, the user input unit 160, the memory 170, and the communication unit 180) included in the aerosol generating device 100. The battery 140 may be a rechargeable battery or a disposable battery. The battery 140 may be, for example, a lithium polymer (LiPoly) battery. However, embodiments are not limited thereto.

The heater 150 may receive power from the battery 140 to heat the aerosol generating material. Although not shown in FIG. 1, the aerosol generating device 100 may further include a power conversion circuit (e.g., a direct current (DC)-to-DC (DC/DC) converter) that converts power of the battery 140 and supplies the power to the heater 150. In addition, when the aerosol generating device 100 generates an aerosol by induction heating, the aerosol generating device 100 may further include a DC-to-alternating current (AC) (DC/AC) converter that converts DC power of the battery 140 into AC power.

The controller 110, the sensing unit 120, the output unit 130, the user input unit 160, the memory 170, and the communication unit 180 may receive power from the battery 140 to perform functions. Although not shown in FIG. 1, the aerosol generating device 100 may further include a power conversion circuit, for example, a low dropout (LDO) circuit or a voltage regulator circuit, which converts power of the battery 140 and supplies the power to respective components.

In an embodiment, the heater 150 may be formed of a predetermined electrically resistive material that is suitable. The electrically resistive material may be a metal or a metal alloy including, for example, titanium, zirconium, tantalum, platinum, nickel, cobalt, chromium, hafnium, niobium, molybdenum, tungsten, tin, gallium, manganese, iron, copper, stainless steel, nichrome, or the like. However, embodiments are not limited thereto. In addition, the heater 150 may be implemented as a metal heating wire, a metal heating plate on which an electrically conductive track is arranged, a ceramic heating element, or the like. However, embodiments are not limited thereto.

In another embodiment, the heater 150 may be an induction heater. For example, the heater 150 may include a susceptor that heats the aerosol generating material by generating heat through a magnetic field applied by a coil.

In an embodiment, the heater 150 may include a plurality of heaters. For example, the heater 150 may include a first heater for heating the aerosol generating article and a second heater for heating a liquid.

The user input unit 160 may receive information input from the user or may output information to the user. For example, the user input unit 160 may include a key pad, a dome switch, a touchpad (e.g., a contact capacitive type, a pressure resistive film type, an infrared sensing type, a surface ultrasonic conduction type, an integral tension measurement type, a piezo effect method, etc.), a jog wheel, a jog switch, or the like. However, embodiments are not limited thereto. In addition, although not shown in FIG. 1, the aerosol generating device 100 may further include a connection interface such as a universal serial bus (USB) interface, and may be connected to another external device through the connection interface such as a USB interface to transmit and receive information or to charge the battery 140.

The memory 170, which is hardware for storing various pieces of data processed in the aerosol generating device 100, may store data processed by the controller 110 and data to be processed by the controller 110. The memory 170 may include at least one type of storage medium of flash memory-type memory, hard disk-type memory, multimedia card micro-type memory, card-type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, a magnetic disk, or an optical disk. The memory 170 may store an operating time of the aerosol generating device 100, a maximum number of puffs, a current number of puffs, at least one temperature profile, data associated with a smoking pattern of the user, or the like.

The communication unit 180 may include at least one component for communicating with another electronic device. For example, the communication unit 180 may include a short-range wireless communication unit 182 and a wireless communication unit 184.

The short-range wireless communication unit 182 may include a Bluetooth communication unit, a Bluetooth low energy (BLE) communication unit, a near field communication unit, a wireless local area network (WLAN) (wireless fidelity (Wi-Fi)) communication unit, a ZigBee communication unit, an infrared data association (IrDA) communication unit, a Wi-Fi direct (WFD) communication unit, an ultra-wideband (UWB) communication unit, and an Ant+ communication unit. However, embodiments are not limited thereto.

The wireless communication unit 184 may include, for example, a cellular network communication unit, an Internet communication unit, a computer network (e.g., a LAN or wide-area network (WAN) communication unit, or the like. However, embodiments are not limited thereto. The wireless communication unit 184 may use subscriber information (e.g., international mobile subscriber identity (IMSI)) to identify and authenticate the aerosol generating device 100 in a communication network.

The controller 110 may control the overall operation of the aerosol generating device 100. In an embodiment, the controller 110 may include at least one processor. The processor may be implemented as an array of a plurality of logic gates, or may be implemented as a combination of a general-purpose microprocessor and a memory in which a program executable by the microprocessor is stored. In addition, it is to be understood by one of ordinary skill in the art to which the present disclosure pertains that it may be implemented in other types of hardware.

The controller 110 may control the temperature of the heater 150 by controlling supply of power from the battery 140 to the heater 150. For example, the controller 110 may control the supply of power by controlling switching of a switching element between the battery 140 and the heater 150. In another example, a direct heating circuit may control the supply of power to the heater 150 according to a control command from the controller 110.

The controller 110 may analyze a sensing result obtained by the sensing of the sensing unit 120 and control processes to be performed thereafter. For example, the controller 110 may control power to be supplied to the heater 150 to start or end an operation of the heater 150 based on the sensing result obtained by the sensing unit 120. In another example, the controller 110 may control an amount of power to be supplied to the heater 150 and a time for which the power is to be supplied, such that the heater 150 may be heated up to a predetermined temperature or maintained at a desired temperature, based on the sensing result obtained by the sensing unit 120.

The controller 110 may control the output unit 130 based on the sensing result obtained by the sensing unit 120. For example, when the number of puffs counted through the puff sensor 126 reaches a preset number, the controller 110 may inform the user that the aerosol generating device 100 is to be ended soon, through at least one of the display 132, the haptic portion 134, or the sound outputter 136.

In an embodiment, the controller 110 may control a power supply time and/or a power supply amount for the heater 150 according to a state of the aerosol generating article sensed by the sensing unit 120. For example, when the aerosol generating article is in an over-humidified state, the controller 110 may control the power supply time for an inductive coil to increase a preheating time, compared to a case where the aerosol generating article is in a general state.

An embodiment may be implemented in the form of a recording medium including instructions executable by a computer, such as a program module executable by the computer. A computer-readable medium may be any available medium that may be accessed by a computer and includes a volatile medium, a non-volatile medium, a removable medium, and a non-removable medium. In addition, the computer-readable medium may include both a computer storage medium and a communication medium. The computer storage medium includes all of a volatile medium, a non-volatile medium, a removable medium, and a non-removable medium implemented by any method or technology for storage of information such as computer-readable instructions, data structures, program modules or other data. The communication medium typically includes computer-readable instructions, data structures, other data in modulated data signals such as program modules, or other transmission mechanisms, and includes any information transfer medium.

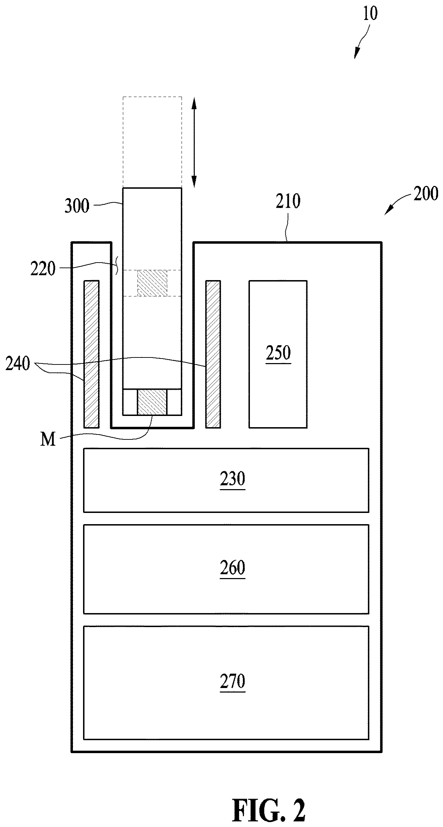

FIG. 2 is a diagram schematically illustrating an aerosol generating system 10 according to an embodiment.

In an embodiment, the aerosol generating system 10 may include an aerosol generating device 200 and an aerosol generating article 300. The aerosol generating device 200 according to an embodiment may include a housing 210, an elongated cavity 220, a heater 230, a coil antenna 240, an inductance sensor 250, a controller 260, and a battery 270.

In an embodiment, the housing 210 may form an exterior of the aerosol generating device 200. The housing 210 may be formed to cover components accommodated in the housing 210. The housing 210 may be formed of a material having high strength and stiffness and may thus protect the components from shock, heat, dust, dirt, and the like delivered from the outside of the housing.

In an embodiment, the elongated cavity 220 may form a recess that is formed from one end of the housing 210 toward the inside of the housing 210. The elongated cavity 220 may accommodate the aerosol generating article 300. An inner diameter of the elongated cavity 220 may be greater than or equal to an outer diameter of the aerosol generating article 300. The elongated cavity 220 may be disposed adjacent to the heater 230 and/or the coil antenna 240.

In an embodiment, the heater 230 may be disposed inside or outside the elongated cavity 220 to heat a medium of the aerosol generating article. When the heater 230 is disposed inside the elongated cavity 220, the heater 230 may be inserted into the aerosol generating article 300 accommodated in the elongated cavity 220 to heat the medium. The heater 230 according to an embodiment may be a blade-type, cylindrical, columnar, needle-type heater, but is not limited thereto. When the heater 230 is disposed outside the elongated cavity 220, the heater 230 may be disposed to surround an outer surface of the elongated cavity 220 to heat the aerosol generating article 300 accommodated in the elongated cavity 220. The heater 230 according to an embodiment may be disposed to surround at least a portion of the outer surface of the elongated cavity 220.

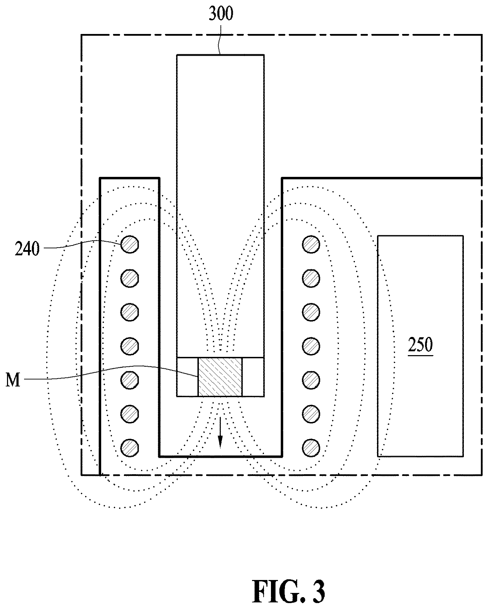

In an embodiment, the coil antenna 240 may be formed to surround the outer surface of the elongated cavity 220. The coil antenna 240 may be wound along the side of the elongated cavity 220 and interact with an identifier M of the aerosol generating article 300 to generate an induced electromotive force (see FIG. 3). The coil antenna 240 and an induced magnetic field will be described in more detail below with reference to FIG. 3.

In an embodiment, the inductance sensor 250 may measure an inductance value and/or an induced electromotive force that changes based on a position of the identifier M that changes as the aerosol generating article 300 is inserted into the elongated cavity 220. The type, amount, and applied pattern of the identifier M may vary depending on the type of the aerosol generating article 300, and the inductance sensor 250 may recognize an inductance value that changes differently based on this. The inductance sensor 250 may transmit the inductance value to the controller 260.

In an embodiment, the controller 260 (e.g., the controller 110 of FIG. 1) may control the overall operation of the aerosol generating device 200. In an embodiment, the controller 110 may include at least one processor. The processor may be implemented as an array of a plurality of logic gates, or may be implemented as a combination of a general-purpose microprocessor and a memory in which a program executable by the microprocessor is stored. In addition, it is to be understood by one of ordinary skill in the art to which the present disclosure pertains that it may be implemented in other types of hardware. The controller 260 may recognize characteristics of the inserted aerosol generating article 300 by the inductance value measured by the inductance sensor 250. As will be described below, the type, amount, and applied pattern of the identifier M may vary depending on the type of the aerosol generating article 300, and the inductance value measured differently based on this may be transmitted to the controller 260. The controller 260 may adjust a heating temperature of the heater 230 according to the transmitted inductance value. In other words, the controller 260 may adjust the heating temperature of the heater 230 according to the characteristics of the aerosol generating article 300.

The battery 270 (e.g., the battery 140 of FIG. 1) may supply power to be used to operate the aerosol generating device 200. For example, the battery 270 may supply power to the coil antenna 240 and supply power required to operate the controller 260 (e.g., the controller 110 of FIG. 1). In addition, the battery 270 may supply power required to operate a display, a sensor, a motor, or the like installed in the aerosol generating device 200.

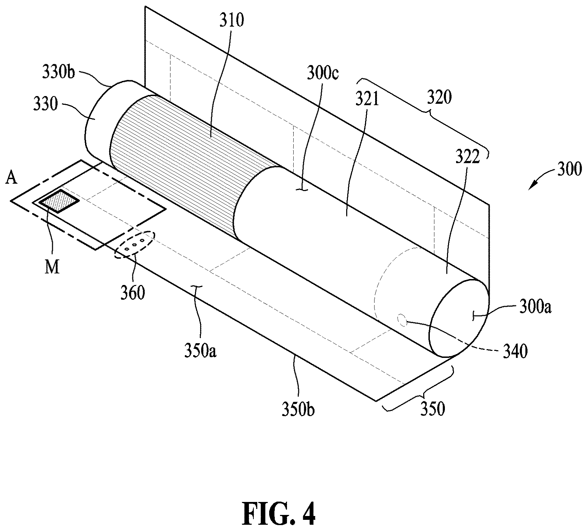

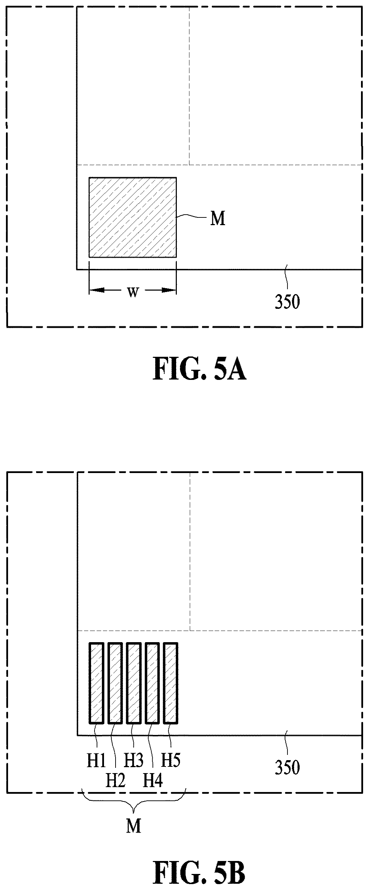

In an embodiment, the term "aerosol generating article 300" may refer to an article that accommodates a medium, in which an aerosol passes through the article and the medium is transferred. The aerosol generating article 300 may include the identifier M. The aerosol generating article 300 will be described in more detail below with reference to FIGS. 4 and 5A to 5C.

FIG. 3 is a diagram schematically illustrating a mechanism for detecting the inductance sensor 250 of the aerosol generating system 10 according to an embodiment.

Referring to FIG. 3, when the aerosol generating article 300 including identifier M is inserted into an elongated cavity (e.g., the elongated cavity 220 of FIG. 2), an electromotive force may be generated by a magnetic force. The inductance sensor 250 may measure the inductance value generated according to the insertion of the aerosol generating article 300, and the inductance represents a magnitude of the induced electromotive force. The inductance value may be derived by Equation 1 below.

$$L = N\frac{\emptyset}{I}\cdots \text{[Equation 1]}$$

In Equation 1 above, L may denote an inductance value, N may denote a number of times a coil of the coil antenna 240 is wound, I may denote an intensity of a current flowing through the coil antenna 240, and Ø may denote a magnetic flux.

The magnetic flux is the number of magnetic field lines vertically passing through a surface, and this may vary depending on the amount, size, and pattern of the identifier M applied onto the aerosol generating article 300. Accordingly, the inductance sensor 250 may recognize the type of the aerosol generating article 300.

The aerosol generating device 200 may further include a temperature sensor (not shown). The inductance value measured by the inductance sensor 250 may vary depending on a temperature. When the heater 230 is disposed adjacent to the inductance sensor 250, the inductance value measured by the inductance sensor 250 may have an error as the temperature increases due to the heating of the heater. Thus, the temperature sensor may be disposed in the vicinity of the inductance sensor 250 to correct the inductance value according to the temperature of the inductance sensor 250.

FIG. 4 is a perspective view schematically illustrating the aerosol generating article 300 according to an embodiment.

The aerosol generating article 300 may include a first end surface 300a, a second end surface 300b, and a side surface 300c formed between the first end surface 300a and the second end surface 300b. The aerosol generating article 300 may include a medium rod 310 and a filter rod 320 aligned side by side in a direction from the second end surface 300b to the first end surface 300a. The medium rod 310 may include an aerosol generating material. The aerosol generating material may include, for example, at least one of glycerin, propylene glycol, ethylene glycol, dipropylene glycol, diethylene glycol, triethylene glycol, tetraethylene glycol, or oleyl alcohol. However, embodiments are not limited thereto. The medium rod 310 may also include other additives such as a flavoring agent, a wetting agent, and/or organic acid. In addition, the medium rod 310 may include a flavoring liquid such as menthol or a moisturizing agent that is added as being sprayed onto the medium rod 310. The medium rod 310 may be manufactured in various forms. For example, the medium rod 310 may be formed as a sheet or as a strand. The medium rod 310 may also be formed of tobacco leaves finely cut from a tobacco sheet. In addition, the medium rod 310 may be enveloped by a thermally conductive material. The thermally conductive material may be, for example, a metal foil such as an aluminum foil, but is not limited thereto. For example, the thermally conductive material enveloping the medium rod 310 may evenly distribute the heat transferred to the medium rod 310 to improve the thermal conductivity to be applied to the medium rod 310, thereby improving the taste of tobacco.

The filter rod 320 may be a cellulose acetate filter. However, a shape of the filter rod 320 is not limited. For example, the filter rod 320 may be a cylindrical rod or a tubular rod including a hollow therein. The filter rod 320 may also be a recess-type rod. The filter rod 320 may include a first segment 321 and a second segment 322.

In an embodiment, the aerosol generating article 300 may include a front end plug 330 and a capsule 340. The front end plug 330 may be disposed at the end of the second end surface 300b. For example, the front end plug 330 may be disposed on a side opposite to the filter rod 320. The front end plug 330 may prevent a medium accommodated in the medium rod 310 from escaping to the outside, and may also prevent an aerosol liquefied from the medium rod 310 during smoking from flowing into an aerosol generating device. The capsule 340 may perform a function of generating a flavor or a function of generating an aerosol. For example, the capsule 340 may have a structure in which a liquid containing a fragrance is wrapped with a film. The capsule 340 may have a spherical or cylindrical shape, but is not limited thereto.

In an embodiment, the aerosol generating article 300 may further include a wrapper 350 and a perforation 360 that is formed on the wrapper 350.

The wrapper 350 may include an inner wrapping surface 350a and an outer wrapping surface 350b. The inner wrapping surface 350a may correspond to a surface that contacts with the medium rod 310, the filter rod 320, and the front end plug 330. The outer wrapping surface 350b is a surface formed on a side opposite to the inner wrapping surface 350a, and may correspond to an inner side surface of an elongated cavity (e.g., the elongated cavity 220 of FIG. 2) of an aerosol generating device (e.g., the aerosol generating device 200 of FIG. 2).

In an embodiment, the identifier M may be applied onto the inner wrapping surface 350a of the wrapper 350. The identifier M may include a conductive material. The identifier M may include, for example, a conductive polymer material. For example, the identifier M may include a conductive polymer material, such as polystyrene sulfonate (PSS), poly(3,4-ethyleneioxythiophene) (PEDOT), polyphenylene sulfide (PPS), polytetrafluoroethylene (PT), polyaniline (PANI), or the like.

In an embodiment, since the identifier M is applied adjacent to the second end surface 330b of the aerosol generating article 300, an induced electromotive force may be generated when the aerosol generating article 300 is inserted into an elongated cavity (e.g., the elongated cavity 220 of FIG. 2). For example, the identifier M may be applied to a position on the inner wrapping surface 350a corresponding to the front end plug 330. The identifier M according to an embodiment may have adhesiveness. When the identifier M having adhesiveness is applied onto the inner wrapping surface 350a of the wrapper 350, the induced electromotive force may be generated when the aerosol generating article 300 is inserted into an aerosol generating device (e.g., the aerosol generating device 200 of FIG. 2), while fixing the wrapper 350 not to be detached from the aerosol generating article 300 without a separate adhesive.

In addition, at least one perforation 360 may be formed in the wrapper 350. For example, the perforation 360 may be formed in an area surrounding the medium rod 310. However, embodiments are not limited thereto. The perforation 360 may perform a function of transferring heat generated by a heater to the inside of the medium rod 310.

FIGS. 5A to 5C are enlarged views of an area A of the aerosol generating article 300 of FIG. 4 according to an embodiment. Referring to FIG. 5A to 5C, the identifier M may be applied onto the wrapper 350 to have various patterns. Desirably, the identifier M may be applied onto an inner wrapping surface (e.g., the inner wrapping surface 350a of FIG. 4) of the wrapper 350.

Referring to FIG. 5A, the identifier M may be applied onto the wrapper 350 in the form of a rectangle having a predetermined width w. An inductance value recognized by an inductance sensor (e.g., the inductance sensor 250 of FIG. 2) when the aerosol generating article 300 is inserted into an elongated cavity (e.g., the elongated cavity 220 of FIG. 2) of an aerosol generating device (e.g., the aerosol generating device 200 of FIG. 2) may vary depending on the width w of the identifier M applied.

Referring to FIG. 5B, the identifier M may be formed to include a plurality of vertical patterns H1, H2, H3, H4, and H5. The identifier M may be applied to have a variously set number of vertical patterns H1, H2, H3, H4, and H5. An inductance value recognized by an inductance sensor (e.g., the inductance sensor 250 of FIG. 2) when the aerosol generating article 300 is inserted into an elongated cavity (e.g., the elongated cavity 220 of FIG. 2) of an aerosol generating device (e.g., the aerosol generating device 200 of FIG. 2) may vary depending on the number of vertical patterns H1, H2, H3, H4, and H5 and the width of each of the vertical patterns H1, H2, H3, H4, and H5.

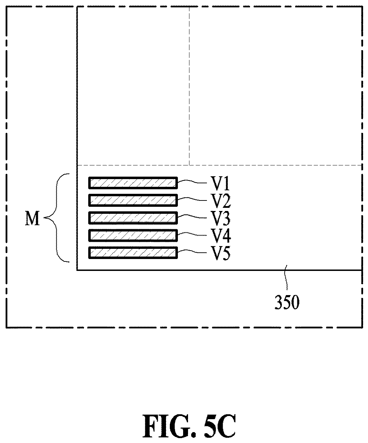

Referring to FIG. 5C, the identifier M may be formed to include a plurality of horizontal patterns V1, V2, V3, V4, and V5. The identifier M may be applied to have a variously set number of horizontal patterns V1, V2, V3, V4, and V5. An inductance value recognized by an inductance sensor (e.g., the inductance sensor 250 of FIG. 2) when the aerosol generating article 300 is inserted into an elongated cavity (e.g., the elongated cavity 220 of FIG. 2) of an aerosol generating device (e.g., the aerosol generating device 200 of FIG. 2) may vary depending on the number of horizontal patterns V1, V2, V3, V4, and V5 and the width of each of the vertical patterns V1, V2, V3, V4, and V5.

The identifier M may be applied onto the wrapper (e.g., the wrapper 350 of FIG. 4) to have various patterns in addition to the patterns according to embodiments shown in FIGS. 5A to 5C, and the pattern of the identifier M is not limited to the embodiments shown in FIGS. 5A to 5C.

In addition, an inductance value recognized by an inductance sensor (e.g., the inductance sensor 250 of FIG. 2) may also vary depending on the amount of the identifier M applied onto the wrapper 350 and the type of the identifier M (e.g., PSS, PEDOT, PPS, PT, PANI, etc.).

Accordingly, the identifier M may be applied onto an inner wrapping surface (e.g., the inner wrapping surface 350a of FIG. 4) of a wrapper (e.g., the wrapper 350 of FIG. 4) corresponding to the same position (e.g., a front end plug (e.g., the front end plug 330 of FIG. 4) to have different patterns, amounts, and types depending on the characteristics of the aerosol generating article 300 (e.g., the length of the aerosol generating article 300, the type of medium included, the flavoring agent included or not included, the type of flavoring agent, the liquid composition included or not included, the type of liquid composition, etc.). Therefore, unique characteristics of the aerosol generating article 300, onto which the identifier M is applied, may be exhibited.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, or replaced or supplemented by other components or their equivalents.

Therefore, other implementations, other embodiments, and equivalents of the claims are within the scope of the following claims.

## Claims

1. An aerosol generating system comprising:

   an aerosol generating article comprising an identifier; and
   an aerosol generating device configured to accommodate the aerosol generating article,
   wherein the aerosol generating device comprises:

      a housing;
      an elongated cavity into which the aerosol generating article is inserted;
      a heater configured to heat the aerosol generating article;
      a coil antenna configured to be formed to surround the elongated cavity;
      an inductance sensor configured to measure an inductance value of the coil antenna; and
      a controller configured to recognize characteristics of the aerosol generating article based on the inductance value that changes as the aerosol generating article is inserted into the elongated cavity, and

   wherein the identifier is applied onto a wrapper of the aerosol generating article.

2. The aerosol generating system of claim 1, wherein

   the identifier is implemented as an adhesive for attaching the wrapper, and
   the identifier comprises a conductive material.

3. The aerosol generating system of claim 2, wherein a type of the conductive material or a pattern of the conductive material applied onto the wrapper varies depending on a type of the aerosol generating article.

4. The aerosol generating system of claim 3, wherein the identifier is disposed at a position corresponding to one end of the aerosol generating article.

5. The aerosol generating system of claim 3, wherein an inductance value detected by the inductance sensor varies depending on the pattern of the conductive material applied onto the wrapper.

6. The aerosol generating system of claim 1, wherein the controller is configured to adjust a heating temperature of the heater according to detected characteristics of the aerosol generating article.

7. The aerosol generating system of claim 1, further comprising:
   a temperature sensor.

8. An aerosol generating article comprising:

   a first end surface;
   a second end surface on a side opposite to the first end surface;
   a side surface formed between the first end surface and the second end surface;
   a medium rod;
   a filter rod; and
   a wrapper,
   wherein the medium rod and the filter rod are aligned side by side in a direction from the second end surface toward the first end surface,
   wherein the wrapper comprises an inner wrapping surface that contacts with the medium rod and the filter rod, and an outer wrapping surface formed on a side opposite to the inner wrapping surface, and
   wherein an identifier is applied onto the inner wrapper surface.

9. The aerosol generating article of claim 8, further comprising:

   a front end plug disposed on an end of the second end surface,
   wherein the identifier is applied onto the inner wrapping surface of the wrapper corresponding to the front end plug.

10. The aerosol generating article of claim 9, wherein a pattern of the identifier applied onto the wrapper varies depending on a type of the aerosol generating article.

11. The aerosol generating article of claim 8, wherein the identifier comprises a conductive material.

12. The aerosol generating article of claim 11, wherein the conductive material has adhesiveness.

**FIG. 1**

FIG. 2

**FIG. 3**

**FIG. 4**

**FIG. 5A**

**FIG. 5B**

**FIG. 5C**

| | INTERNATIONAL SEARCH REPORT | International application No. |
|---|---|---|
| | | **PCT/KR2023/019628** |

**A. CLASSIFICATION OF SUBJECT MATTER**

**A24D 1/02**(2006.01)i; **A24D 1/20**(2020.01)i; **A24F 40/46**(2020.01)i; **A24F 40/51**(2020.01)i; **A24F 40/50**(2020.01)i; **A24F 40/57**(2020.01)i; **D21H 27/00**(2006.01)i; **D21H 21/14**(2006.01)i; **A24F 40/60**(2020.01)i; **A24F 40/20**(2020.01)i

According to International Patent Classification (IPC) or to both national classification and IPC

**B. FIELDS SEARCHED**

Minimum documentation searched (classification system followed by classification symbols)

A24D 1/02(2006.01); A24F 40/46(2020.01); A24F 40/465(2020.01); A24F 40/50(2020.01); A24F 47/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에어로졸 (aerosol), 히터 (heater), 코일 (coil), 센서 (sensor), 제어부 (control), 식별 (identity)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0041617 A (PHILIP MORRIS PRODUCTS S.A.) 15 April 2021 (2021-04-15) See paragraphs [0013]-[0015] and [0037]; and claims 1-11. | 1,6-7 |
| A | | 2-5,8-12 |
| X | KR 10-2022-0069614 A (KT & G CORPORATION) 27 May 2022 (2022-05-27) See paragraphs [0071]-[0076] and [0090]-[0092]; claim 12; and figures 8 and 15-17. | 8-10 |
| Y | | 1,6-7 |
| A | KR 10-2022-0090217 A (KT & G CORPORATION) 29 June 2022 (2022-06-29) See entire document. | 1-12 |
| A | KR 10-2020-0038926 A (PHILIP MORRIS PRODUCTS S.A.) 14 April 2020 (2020-04-14) See entire document. | 1-12 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2024** | **08 March 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/019628**

| C. | DOCUMENTS CONSIDERED TO BE RELEVANT | |
|---|---|---|
| Category* | Citation of document, with indication, where appropriate, of the relevant passages | Relevant to claim No. |
| A | WO 2015-177247 A1 (PHILIP MORRIS PRODUCTS S.A.) 26 November 2015 (2015-11-26)<br>See entire document. | 1-12 |

Form PCT/ISA/210 (second sheet) (July 2022)

<table>
<tr><td colspan="2" align="center"><b>INTERNATIONAL SEARCH REPORT</b><br><b>Information on patent family members</b></td><td colspan="2">International application No.<br><br><b>PCT/KR2023/019628</b></td></tr>
</table>

| Patent document cited in search report | Publication date (day/month/year) | Patent family member(s) | Publication date (day/month/year) |
|---|---|---|---|
| KR 10-2021-0041617 A | 15 April 2021 | CN 112566518 A | 26 March 2021 |
| | | EP 3836811 A1 | 23 June 2021 |
| | | EP 3836811 B1 | 05 October 2022 |
| | | JP 2021-534742 A | 16 December 2021 |
| | | JP 7407169 B2 | 28 December 2023 |
| | | US 2021-0315277 A1 | 14 October 2021 |
| | | WO 2020-035587 A1 | 20 February 2020 |
| KR 10-2022-0069614 A | 27 May 2022 | KR 10-2023-0141715 A | 10 October 2023 |
| KR 10-2022-0090217 A | 29 June 2022 | EP 4266933 A1 | 01 November 2023 |
| | | KR 10-2508689 B1 | 10 March 2023 |
| | | WO 2022-139329 A1 | 30 June 2022 |
| KR 10-2020-0038926 A | 14 April 2020 | CN 110913712 A | 24 March 2020 |
| | | EP 3664642 A1 | 17 June 2020 |
| | | EP 3664642 B1 | 05 January 2022 |
| | | JP 2020-529217 A | 08 October 2020 |
| | | JP 2022-189871 A | 22 December 2022 |
| | | JP 7161521 B2 | 26 October 2022 |
| | | KR 10-2023-0135104 A | 22 September 2023 |
| | | KR 10-2569256 B1 | 22 August 2023 |
| | | US 11375753 B2 | 05 July 2022 |
| | | US 2021-0145061 A1 | 20 May 2021 |
| | | WO 2019-030361 A1 | 14 February 2019 |
| WO 2015-177247 A1 | 26 November 2015 | CN 106455714 A | 22 February 2017 |
| | | CN 106455714 B | 09 October 2020 |
| | | CN 111035072 A | 21 April 2020 |
| | | CN 111035072 B | 03 October 2023 |
| | | CN 111109662 A | 08 May 2020 |
| | | CN 111109662 B | 10 November 2023 |
| | | CN 111449293 A | 28 July 2020 |
| | | EP 3145340 A1 | 29 March 2017 |
| | | EP 3145340 B1 | 04 July 2018 |
| | | EP 3406148 A1 | 28 November 2018 |
| | | EP 3406148 B1 | 18 November 2020 |
| | | EP 3777572 A1 | 17 February 2021 |
| | | JP 2017-515488 A | 15 June 2017 |
| | | JP 2020-171310 A | 22 October 2020 |
| | | JP 2022-058616 A | 12 April 2022 |
| | | JP 6789119 B2 | 25 November 2020 |
| | | JP 7011684 B2 | 27 January 2022 |
| | | JP 7419409 B2 | 22 January 2024 |
| | | KR 10-2017-0007262 A | 18 January 2017 |
| | | KR 10-2023-0062884 A | 09 May 2023 |
| | | US 10159283 B2 | 25 December 2018 |
| | | US 10463080 B2 | 05 November 2019 |
| | | US 10959463 B2 | 30 March 2021 |
| | | US 2017-0095003 A1 | 06 April 2017 |
| | | US 2018-0317561 A1 | 08 November 2018 |
| | | US 2020-0000152 A1 | 02 January 2020 |
| | | US 2021-0120875 A1 | 29 April 2021 |

Form PCT/ISA/210 (patent family annex) (July 2022)

**EP 4 461 146 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170132823